# EUROPEAN PATENT APPLICATION

(11) **EP 4 586 360 A1**
(43) Date of publication of application: **16.07.2025**
(21) Application number: 23868534.1
(22) Date of filing: 18.09.2023
(51) Int. Cl.: H01M 10/42, G01N 23/18, G01N 23/04, G01N 23/083

(54) **BATTERY CELL INSPECTION APPARATUS, BATTERY CELL INSPECTION METHOD, AND BATTERY CELL INSPECTION SYSTEM**

(30) Priority: 19.09.2022 KR 20220117880; 05.09.2023 KR 20230117443
(71) Applicant: SK On Co., Ltd., Seoul 03161 (KR)
(72) Inventor: KIM, Hyung Joon, Daejeon 34124 (KR); SHIN, Dong Whan, Daejeon 34124 (KR); LEE, Min Kyu, Daejeon 34124 (KR)
(74) Representative: Stolmár & Partner Patentanwälte PartG mbB
(86) International application number: PCT/KR2023/014076
(87) International publication number: WO 2024/063482

(57) **Abstract**

A battery cell inspection apparatus according to an embodiment of the present invention comprises: a cell inspection unit for inspecting a cell; a plurality of cell accommodation portions which receive the supply of battery cells from the outside, and are spaced apart from one another with the cell inspection unit therebetween; and a stage which comprises a first portion and a second portion on which the battery cells supplied to the cell accommodation units are arranged, and moves the battery cells supplied to the cell accommodation portions while reciprocating among the plurality of cell accommodation portions, wherein, while the second portion on which the battery cell is arranged is located in the cell inspection unit, the battery cell supplied to a first cell accommodation portion, from among the plurality of cell accommodation portions, is arranged on the second portion, and while the first portion on which the battery cell is arranged is located in the cell inspection unit, the battery cell supplied to a second cell accommodation portion, from among the plurality of cell accommodation portions, can be arranged on the second portion.

## Description

### [Technical Field]

Embodiments of the present invention relate to a battery cell inspection apparatus, a battery cell inspection method, and a battery cell inspection system.

### [Background Art]

As the electronics, communications, and space industries develop, demand for lithium secondary batteries as an energy power source is drastically increasing. In particular, as the importance of global eco-friendly policies is emphasized, the electric vehicle market is growing swiftly, and research and development on lithium secondary batteries are being actively conducted worldwide.

When these secondary batteries are manufactured, various types of inspections may be performed to check for defects in the secondary batteries. At this time, the inspection time increases due to the supply of secondary batteries to the inspection apparatus performing the inspection, so a new type of secondary battery inspection apparatus capable of shortening this time is required.

### [Disclosure]

### [Technical Problem]

An embodiment of the present invention provide a battery cell inspection apparatus, a battery cell inspection method, and a battery cell inspection system capable of shortening inspection time.

### [Technical Solution]

A battery cell inspection apparatus according to an embodiment of the present invention includes: a cell inspection portion inspecting cells; a plurality of cell accommodating portions receiving battery cells from the outside and positioned to be spaced apart from each other with the cell inspection portion therebetween; and a stage including a first part and a second part in which the battery cells supplied to the cell accommodating portions are disposed and moving the battery cells supplied to the cell accommodating portions while reciprocating the plurality of cell accommodating portions, and while the second part in which the battery cells are disposed is positioned in the cell inspection portion, a battery cell supplied to a first cell accommodating portion among the plurality of cell accommodating portions may be disposed in the second part, and while the first part in which the battery cells are disposed is positioned in the cell inspection portion, a battery cell supplied to a second cell accommodating portion among the plurality of cell accommodating portions may be disposed in the second part.

A battery cell inspection method according to an embodiment of the present invention may include: supplying a first battery cell to a first cell accommodating portion; disposing the first battery cell on a first part of a stage and moving the stage so that the first part is positioned in a cell inspection portion; performing inspection of the first battery cell positioned in the cell inspection portion; disposing a second battery cell supplied to a second cell accommodating portion on a second part of the stage while performing inspection of the first battery cell; moving the stage so that the second part is positioned in the cell inspection portion; and performing inspection of the second battery cell positioned in the cell inspection portion.

A battery cell inspection system according to an embodiment of the present invention may include: a battery cell supply apparatus supplying supplies battery cells; a battery cell inspection apparatus receiving battery cells from the battery cell supply apparatus, performing inspection, and discharging battery cells that have been completely inspected; and a battery cell classification apparatus classifying battery cells discharged from the battery cell inspection apparatus according to inspection results, and the battery cell supply apparatus may include: a cell inspection portion inspecting cells; a plurality of cell accommodating portions receiving battery cells from the outside and are positioned to be spaced apart from each other with the cell inspection portion therebetween; and a stage including a first part and a second part in which the battery cells supplied to the cell accommodating portions are disposed and moving the battery cells supplied to the cell accommodating portions while reciprocating the plurality of cell accommodating portions; and while the second part in which the battery cells are disposed is positioned in the cell inspection portion, a battery cell supplied to a first cell accommodating portion among the plurality of cell accommodating portions may be disposed in the second part, and while the first part in which the battery cells are disposed is positioned in the cell inspection portion, a battery cell supplied to a second cell accommodating portion among the plurality of cell accommodating portions may be disposed in the second part.

### [Advantageous Effects]

According to the present technology, a battery cell inspection apparatus, a battery cell inspection method, and a battery cell inspection system capable of shortening inspection time may be provided.

### [Description of Drawings]

FIG. 1 shows a diagram for explaining a battery cell inspection apparatus according to one embodiment of the present invention.
FIG. 2 shows a diagram for explaining a battery cell inspection system according to one embodiment of the present invention.
FIGS. 3A to 3D show diagrams for explaining a battery cell inspection process by a battery cell inspection system according to one embodiment of the present invention.
FIG. 4 shows a diagram for explaining a cell inspection portion in a battery cell inspection apparatus according to one embodiment of the present invention.
FIG. 5 shows a diagram for explaining an example of an X-ray detection portion in the cell inspection portion of FIG. 4.
FIGS. 6A to 6C show diagrams for explaining another example of an X-ray detection portion in the cell inspection portion of FIG. 4.
FIG. 7 shows a flowchart for explaining a battery cell inspection method according to one embodiment of the present invention.
FIG. 8 shows a flowchart for explaining some processes of a battery cell inspection method according to one embodiment of the present invention in more detail.

### [Modes of the Invention]

The structural or functional descriptions of embodiments disclosed in the present specification or application are merely illustrated for the purpose of explaining embodiments according to the technical principle of the present invention, and embodiments according to the technical principle of the present invention may be implemented in various forms in addition to the embodiments disclosed in the specification of application. In addition, the technical principle of the present invention is not construed as being limited to the embodiments described in the present specification or application.

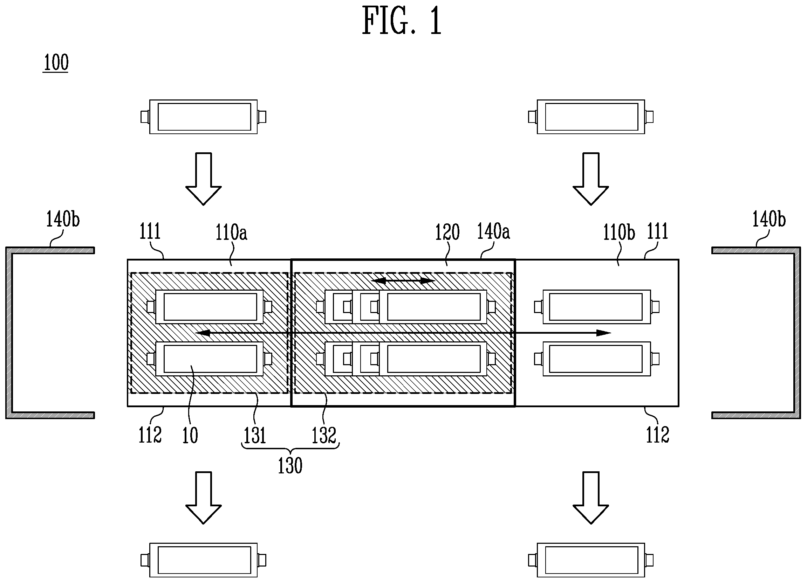

FIG. 1 shows a diagram for explaining a battery cell inspection apparatus according to one embodiment of the present invention.

Referring to FIG. 1, a battery cell inspection apparatus 100 may include a plurality of cell accommodating portions 110a and 110b, a cell inspection portion 120, and a stage 130.

A plurality of cell accommodating portions 110a and 110b may be positioned to be spaced apart from each other.

In one embodiment, a plurality of cell accommodating portions may include a first cell accommodating portion 110a and a second cell accommodating portion 110b.

Cell accommodating portions 110a and 110b may each include a cell supply area 111 on one side surface, through which battery cells 10 are supplied from the outside.

Cell accommodating portions 110a and 110b may each include a cell discharge area 112 on the other side, through which battery cells 10 are discharged to the outside.

A cell supply area 111 and a cell discharge area 112 may be positioned on different side surfaces of a cell accommodating portion. In one embodiment, a cell supply area 111 and a cell discharge area 112 may be positioned on opposite side surfaces of a cell accommodating portion.

In one embodiment, each of cell accommodating portions 110a and 110b may include a cell detection sensor, thereby detecting whether a battery cell 10 is supplied inside each of the cell accommodating portions 110a and 110b.

A cell inspection portion 120 may be positioned between a plurality of cell accommodating portions 110a and 110b.

In one embodiment, a cell inspection portion 120 may be positioned between a first cell accommodating portion 110a and a second cell accommodating portion 110b.

In one embodiment, a cell inspection portion 120 may perform a charge inspection for measuring the charge resistance, a short-circuit inspection for inspecting a short-circuit, an appearance inspection for inspecting the appearance, an X-ray inspection for inspection by taking an X-ray image, and the like, but is not limited to a specific inspection, and various types of inspection used in the battery manufacturing process may be performed.

In one embodiment, a cell inspection portion 120 may perform an X-ray inspection, and accordingly, the cell inspection portion 120 may include an X-ray inspection apparatus. An X-ray inspection apparatus may include an X-ray output portion and an X-ray detection portion. A cell inspection portion 120 may obtain an X-ray image of a battery cell 10 through an X-ray inspection apparatus, and may perform inspection of the battery cell 10 based on the X-ray inspection apparatus. A cell inspection portion 120 may perform inspection by photographing a battery cell 10 disposed therein multiple times using an X-ray inspection apparatus.

The cell inspection portion 120 may include a shielding portion 140a. A shielding portion 140a may be formed to surround the outer circumference of a cell inspection portion 120. A shielding portion 140a may include various shielding materials capable of preventing X-rays from being radiated to the outside, and may include, for example, lead, tungsten, bismuth, barium sulfate, boron, and the like. A shielding portion 140a does not need to be formed to surround an entire battery cell inspection apparatus 100, but may be sufficiently formed to surround only an cell inspection portion 120, thereby minimizing the shielding installation area. When needed, an additional shielding portion 140b may be further formed on a part of the exterior of a battery cell inspection apparatus 100.

A stage 130 may reciprocate a plurality of cell accommodating portions 110a and 110b. While reciprocating a plurality of cell accommodating portions 110a and 110b, a stage 130 may pass through an cell inspection portion 120 positioned between the plurality of cell accommodating portions 110a and 110b.

Battery cells 10 supplied to a plurality of cell accommodating portions 110a and 110b may be disposed on a stage 130. In one embodiment, a stage 130 may include a first part 131 and a second part 132 where battery cells 10 are disposed. For example, a first part 131 may be a part where a battery cell 10 supplied to a first cell accommodating portion 110a is disposed, and a second part 132 may be a part where a battery cell 10 supplied to a second cell accommodating portion 110b is disposed.

In one embodiment, when a first part 131 is positioned in a first cell accommodating portion 110a, a part of a stage 130 positioned in a cell inspection portion 120 may be a second part 132, and when a second part is positioned in a second cell accommodating portion 110b, a part of a stage 130 positioned in the cell inspection portion 120 may be a first part 131.

In an embodiment, while a first part 131 in which a battery cell 10 is disposed is positioned in a cell inspection portion 120, a battery cell 10 supplied to a second cell accommodating portion 110b may be disposed on a second part 132. In addition, while a second part 132 in which a battery cell 10 is disposed is positioned in a cell inspection portion 120, a battery cell 10 supplied to a first cell accommodating portion 110a may be disposed on a first part 131. In other words, while a cell inspection portion 120 performs inspection of a battery cell 10, a battery cell 10 may be supplied and disposed in a part of a stage positioned in cell accommodating portions 110a and 110b.

Before a battery cell 10 is newly supplied to a part of a stage positioned in cell accommodating portions 110a and 110b, a battery cell 10 that has been completely inspected may be discharged to the outside from the cell accommodating portions 110a and 110b. More specifically, a battery cell 10 may be discharged to the outside of the cell through a cell discharge area 112 of cell accommodating portions 110a and 110b. In an embodiment, while a first part 131 where a battery cell 10 is disposed is positioned in a cell inspection portion 120, a battery cell 10 positioned on a second part 132 and moved from the cell inspection portion 120 may be discharged. In addition, while a second part 132 in which a battery cell 10 is disposed is positioned in a cell inspection portion 120, a battery cell 10 positioned on a first part 131 and moved from the cell inspection portion 120 may be discharged.

In one embodiment, a plurality of cell accommodating portions, for example, a first cell accommodating portion 110a and a second cell accommodating portion 110b, and a cell inspection portion 120, may be positioned on a straight line. Accordingly, a stage 130 may reciprocate between a first cell accommodating portion 110a and a second cell accommodating portion 110b, and at this time, the stage 130 may pass over the cell inspection portion 120.

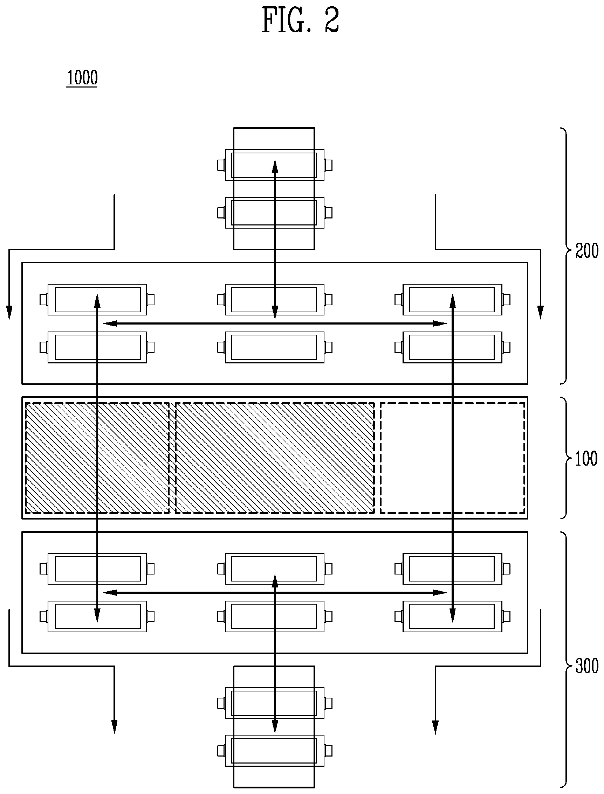

FIG. 2 shows a diagram for explaining a battery cell inspection system according to one embodiment of the present invention.

Referring to FIGS. 1 and 2, a battery cell inspection system 1000 may include a battery cell inspection apparatus 100, a battery cell supply apparatus 200, and a battery cell classification apparatus 300.

A battery cell inspection apparatus 100 may receive battery cells 10 from a battery cell supply apparatus 200 and perform inspection. A battery cell inspection apparatus 100 may discharge a battery cell 10 that has been completely inspected to a battery cell classification apparatus 300.

In one embodiment, a battery cell inspection apparatus may be the battery cell inspection apparatus 100 described in FIG. 1.

A battery cell supply apparatus 200 may supply battery cells 10 to a battery cell inspection apparatus 100. More specifically, battery cells 10 may be supplied to cell accommodating portions 110a and 110b of a battery cell inspection apparatus 100.

A battery cell classification apparatus 300 may classify battery cells 10 discharged from a battery cell inspection apparatus 100 according to inspection results. In one embodiment, a battery cell classification apparatus 300 may include a defective product discharge portion and a normal product discharge portion. According to the results of inspection performed by a battery cell inspection apparatus 100, battery cells 10 determined to be defective may be transferred to a defective product discharge portion, and battery cells 10 determined to be normal may be transferred to a good product discharge portion.

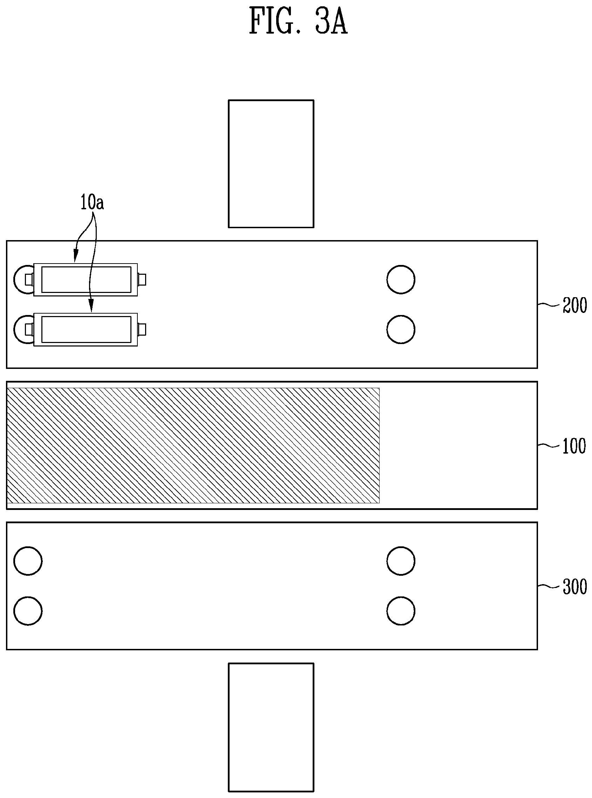

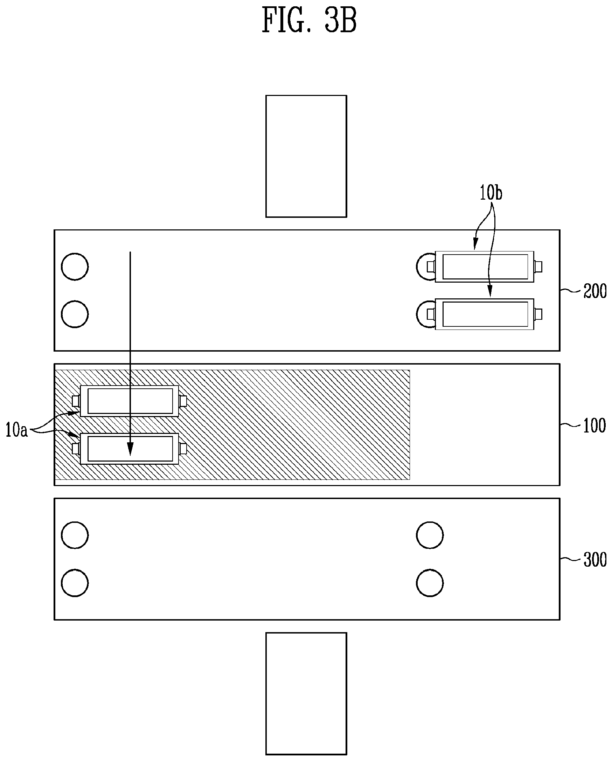

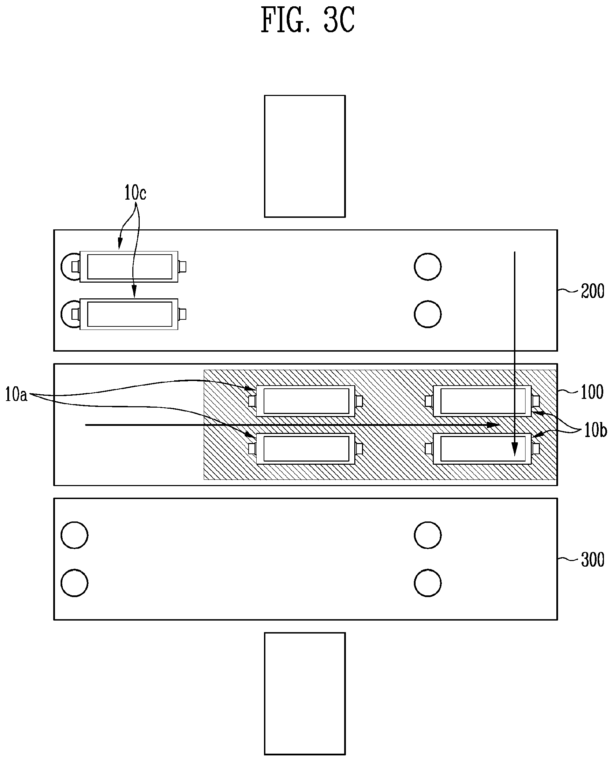

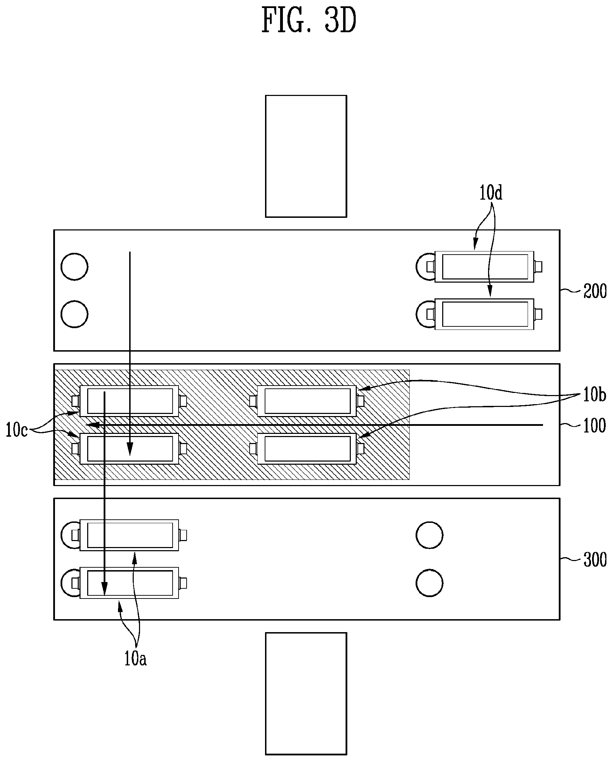

FIGS. 3A to 3D show diagrams for explaining a battery cell inspection process by a battery cell inspection system according to one embodiment of the present invention.

Referring to FIGS. 1, 2, and 3A, a first battery cell 10a may be prepared to be supplied to a battery cell inspection apparatus 100 within a battery cell supply apparatus 200. The battery cell supply apparatus 200 may be prepared to supply the first battery cell 10a to a first cell accommodating portion 110a within the battery cell inspection apparatus 100.

Referring to FIGS. 1, 2, and 3B, a first battery cell 10a may be supplied to a first cell accommodating portion 110a within a battery cell inspection apparatus 100, and accordingly, the first battery cell 10a may be disposed on a first part 131 of a stage 130 positioned in the first cell accommodating portion. Meanwhile, a second battery cell 10b may be prepared to be supplied to a battery cell inspection apparatus 100 within a battery cell supply apparatus 200. A battery cell supply apparatus 200 may be prepared to supply a second battery cell 10b to a second accommodating portion 110b within a battery cell inspection apparatus 100.

Referring to FIGS. 1, 2, and 3C, a stage 130 may move toward a second cell accommodating portion 110b, and accordingly, a first part 131 of the stage 130 may be positioned in a cell inspection portion 120, and a second part 132 may be positioned in the second cell accommodating portion 110b. A first battery cell 10a positioned on the first part 131 may be inspected within the cell inspection portion 120. At the same time, a second battery cell 10b may be supplied to the second cell accommodating portion 110b within the battery cell inspection apparatus 100, and accordingly, the second battery cell 10b may be positioned on a second part 132 of the stage 130 positioned in the second cell accommodating portion. Meanwhile, a third battery cell 10c may be prepared to be supplied to the battery cell inspection apparatus 100 within the battery cell supply apparatus 200. The battery cell supply apparatus 200 may be prepared to supply the third battery cell 10c to the first cell accommodating portion 110a within the battery cell inspection apparatus 100.

Referring to FIGS. 1, 2, and 3D, a stage 130 may move toward a first cell accommodating portion 110a, and accordingly, a second part 132 of a stage 130 may be positioned in a cell inspection portion 120, and a first portion 131 may be positioned in the first cell accommodating portion 110a. A second battery cell 10b positioned on the second part 132 may be inspected within the cell inspection portion 120. At the same time, a first battery cell 10a that has been completely inspected may be discharged from the first cell accommodating portion 110a to a battery cell classification apparatus 300 through a cell discharge area 112. In addition, after the discharge of the first battery cell 10a is completed, a third battery cell 10c may be supplied to the first cell accommodating portion 110a within a battery cell inspection apparatus 100, and accordingly, the third battery cell 10c may be disposed on the first part 131 of the stage 130 positioned in the second cell accommodating portion. Meanwhile, a fourth battery cell 10d may be prepared to be supplied to the battery cell inspection apparatus 100 within the battery cell supply apparatus 200. The battery cell supply apparatus 200 may be prepared to supply the fourth battery cell 10d to a second cell accommodating portion 110b within the battery cell inspection apparatus 100.

By repeating the processes described in FIGS. 3A to 3D, the stage 130 reciprocates between the first cell accommodating portion 110a and the second cell accommodating portion 110b, and thus inspection of the supplied battery cells 10 may be performed.

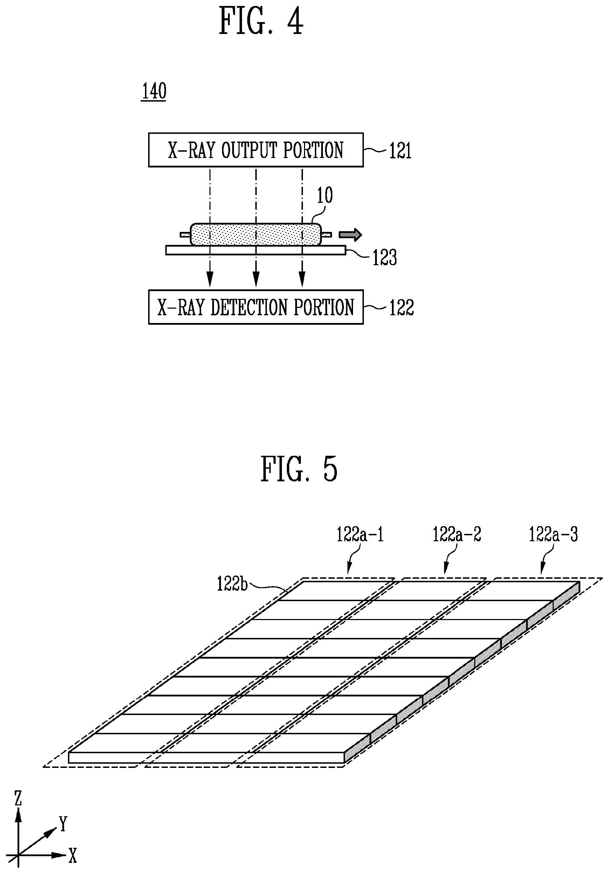

FIG. 4 shows a diagram for explaining a cell inspection portion in a battery cell inspection apparatus according to one embodiment of the present invention.

Referring to FIG. 4, a cell inspection portion 140 may include an X-ray output portion 121 and an X-ray detection portion 122.

An X-ray output portion 121 may generate X-rays. X-rays may be electromagnetic waves having properties of penetrating objects. For example, X-rays may be electromagnetic waves having a wavelength of 0.01 to 10 nanometers.

An X-ray output portion 121 may irradiate X-rays to a battery cell 10. A battery cell 10 may be a secondary battery that may reused through charging even after being discharged. For example, a battery cell 10 may be a lithium ion battery. A battery cell 10 may include a plurality of electrode layers and a separator disposed between the plurality of electrode layers. A plurality of electrode layers may include at least one anode layer and at least one cathode layer.

An X-ray output portion 121 may irradiate X-rays in a specific direction. For example, the specific direction may be a direction in which multiple electrode layers are stacked. For example, the specific direction may be a direction perpendicular to a plurality of electrode layers. For example, the specific direction may be a direction that passes through all of a plurality of electrode layers. To this end, an X-ray output portion 121 may be positioned above or below a battery cell 10.

**In** one embodiment, an X-ray output portion 121 may include an X-ray tube, a voltage generator, and a current source.

An X-ray tube may include a cathode, an anode, and a vacuum tube. A cathode and an anode may be placed inside a vacuum tube. For example, each of cathode and an anode may be implemented with a metal such as tungsten (W), molybdenum (Mo), chromium (Cr), rhenium (Re), copper (Cu), cobalt (Co), iron (Fe), tantalum (Ta), zirconium (Zr), nickel (Ni), or an alloy thereof. An X-ray tube may be of one of a closed type having a structure in which the inside of the vacuum tube is sealed in a vacuum state or an open type having a structure that maintains the inside of the vacuum tube in a vacuum state when a separate vacuum pump is operated. When the X-ray output portion 121 is of the open type, the X-ray output portion 121 may further include a vacuum pump. A vacuum pump may create a vacuum state inside a vacuum tube.

A current source may apply a current to heat a filament of a cathode to generate thermoelectrons at the cathode. A voltage generator may apply a high voltage between a cathode and an anode to accelerate thermoelectrons. For example, the high voltage may be a voltage in the order of kilovolts. In this case, the accelerated thermoelectrons may collide with the anode to generate X-rays. The generated X-rays may be irradiated to a subject.

An X-ray detection portion 122 may detect X-rays that have penetrated through a battery cell 10. To this end, an X-ray detection portion 122 may be positioned in the progression direction of the X-rays that have penetrated through a battery cell 10. In one embodiment, an X-ray detection portion 122 may obtain a gray value based on the intensity of the X-rays that have penetrated through a battery cell 10. For example, an X-ray detection portion 122 may receive X-rays that have penetrated through a battery cell 10. The X-ray detection portion 122 may obtain a gray value based on the intensity of the received X-rays.

An X-ray detection portion 122 may include a plurality of pixels. Each of a plurality of pixels may receive X-rays that have penetrated through a corresponding unit area among the unit areas of a battery cell 10. When X-rays are received, each pixel may convert the X-rays to obtain a sensing signal.

In one embodiment, an X-ray detection portion 122 may obtain a gray value using a time delay integration (TDI) method. In this case, the X-ray detection portion 122 may include a plurality of line scanners. The line scanners may include a plurality of pixels arranged along the row or column direction. In this case, sensing signals obtained by allowing X-rays to unidirectionally penetrate a unit area of the battery cell 10 multiple times may be accumulated. The accumulated sensing signals may be treated as a single sensing signal for the unit area. In other words, a clearer image may be obtained by superimposing the sensing signals obtained as many as the number of line scanners to create a single image. In another embodiment, an X-ray detection portion 122 may obtain a gray value using a flat panel detection (FPD) method. In this case, an X-ray detection portion 122 may include a plurality of pixels arranged along the row direction and the column direction.

**In** addition, a cell inspection portion 140 may further include a transfer portion 123. A transfer portion 123 may move a battery cell 10 in a specific direction. For example, a specific direction may be a horizontal direction. For example, a specific direction may be a direction perpendicular to the direction in which X-rays are irradiated. For example, a horizontal direction may be a direction in parallel with the direction in which the above-described stage moves. In one embodiment, a transfer portion 123 may include a conveyor and a transfer motor. A transfer motor may transmit a rotational force to a conveyor. When a conveyor transmits a rotational force, the conveyor may move a battery cell 10 positioned at a specific point on the conveyor to another point.

**In** one embodiment, a transfer portion 123 may refer to at least a part of the above-described stage, and in another embodiment, a transfer portion 123 may be a component distinct from the above-described stage, and the transfer portion 123 may be disposed on the stage.

FIG. 5 shows a diagram for explaining an example of an X-ray detection portion in the cell inspection portion of FIG. 4.

Referring to FIG. 5, an X-ray detection portion 122 may include a plurality of line scanners 122a-1, 122a-2, and 122a-3.

Each of a plurality of line scanners 122a-1, 122a-2, and 122a-3 may include a plurality of pixels. For example, each of the line scanners 122a-1, 122a-2, and 122a-3 may include a plurality of pixels arranged in a line shape along the y-axis direction. For example, each of the line scanners 122a-1, 122a-2, and 122a-3 may include pixels arranged in an 1 x n arrangement. Here, n is a natural number.

A pixel 122b may detect penetration X-rays that have penetrated through a unit area of a battery cell 10 to obtain a sensing signal for the penetration X-rays. For example, a sensing signal may be a charge, a current, or a voltage. The level of a sensing signal may represent the intensity of penetration X-rays. A pixel 122b may correspond to a unit area of a battery cell 10.

**In** one embodiment, the level of a sensing signal may be inversely proportional to the intensity of X-rays. For example, the lower the intensity of X-rays, the higher level of the sensing signal may be obtained. In another embodiment, the level of a sensing signal may be proportional to the intensity of X-rays.

**In** one embodiment, a pixel 122b may include a photoconductor that directly converts X-rays into an electrical signal. In another embodiment, a pixel 122b may include a scintillator that converts X-rays into visible light and a photodiode that converts visible light into an electrical signal.

**In** one embodiment, an X-ray detection portion 122 may include a pixel operation portion. A pixel operation portion may receive a sensing signal and obtain a gray value corresponding to the level of the sensing signal. For example, a pixel operation portion may include an analog-to-digital converter that converts an analog signal into a digital signal.

**In** one embodiment, a plurality of line scanners 122a-1, 122a-2, and 122a-3 may be arranged along the x-axis direction. A plurality of line scanners 122a-1, 122a-2, and 122a-3 may include a first line scanner 122a-1, a second line scanner 122a-2, and a third line scanner 122a-3. When a battery cell 10 moves in the x-axis direction, a pixel of a first line scanner 122a-1 may transmit the obtained sensing signal to a corresponding pixel of a second line scanner 122a-2, the pixel of the second line scanner 120-1 may transmit the obtained sensing signal to a corresponding pixel of a third line scanner 122a-3, and the pixel of the third line scanner 122a-3 may transmit a final sensing signal to a pixel operation portion.

**In** one embodiment, an X-ray detection portion 122 may obtain a gray value through a TDI method by using a plurality of line scanners 122a-1, 122a-2, and 122a-3. Accordingly, sensing signals obtained by allowing X-rays to unidirectionally penetrate through a unit area of a battery cell 10 multiple times may be accumulated. The accumulated sensing signals may be treated as a single sensing signal for the unit area. In other words, a clearer image may be obtained by superimposing the sensing signals obtained as many as the number of line scanners to create a single image.

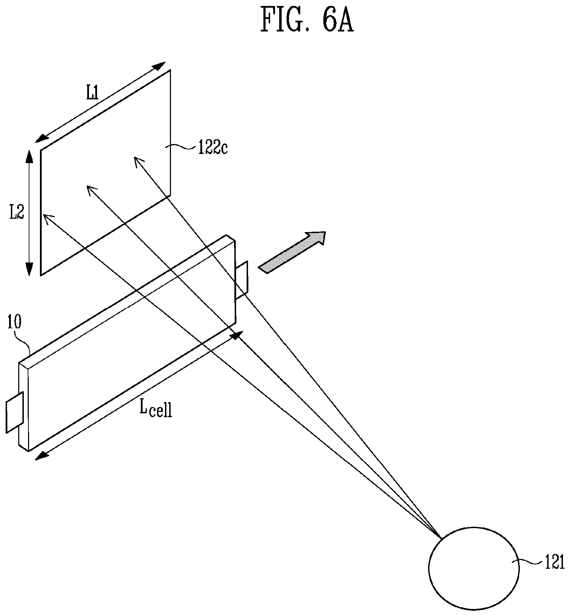

FIGS. 6A to 6C show diagrams for explaining another example of an X-ray detection portion in the cell inspection portion of FIG. 4.

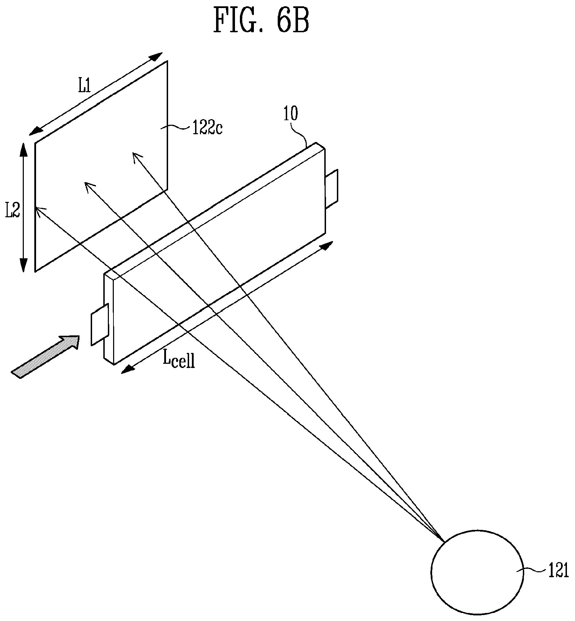

Referring to FIGS. 6A and 6B, an X-ray detection portion 122 may include a flat panel detector 122c. A flat panel detector may include a pixel array including a plurality of pixels. For example, a pixel array may include pixels arranged in an m x n arrangement.

Pixels may each detect penetration X-rays that have penetrated through a unit area of a battery cell 10 to obtain a sensing signal for the penetration X-rays. For example, a sensing signal may be a charge, a current, or a voltage. The level of a sensing signal may represent the intensity of penetration X-rays. Pixels may correspond to a unit area of a battery cell 10.

**In** one embodiment, the level of a sensing signal may be inversely proportional to the intensity of X-rays. For example, the lower the intensity of X-rays, the higher level of the sensing signal may be obtained. In another embodiment, the level of a sensing signal may be proportional to the intensity of X-rays.

**In** one embodiment, pixels may include a photoconductor that directly converts X-rays into an electrical signal. In another embodiment, pixels may include a scintillator that converts X-rays into visible light and a photodiode that converts visible light into an electrical signal.

**In** one embodiment, an X-ray detection portion 122 may include a pixel operation portion. A pixel operation portion may receive a sensing signal and obtain a gray value corresponding to the level of the sensing signal. For example, a pixel operation portion may include an analog-to-digital converter that converts an analog signal into a digital signal.

In one embodiment, a first length L1 of a flat panel detector may be shorter than the length (L_{cell}) in an electrode tab protrusion direction of a battery cell 10.

Accordingly, while moving a battery cell 10 in one direction using a transfer portion (or stage), images of the battery cell 10 must be obtained multiple times to obtain an image of the entire battery cell 10. In other words, by integrating the multiple images obtained while moving the battery cell 10, an X-ray image of the battery cell 10 may be obtained.

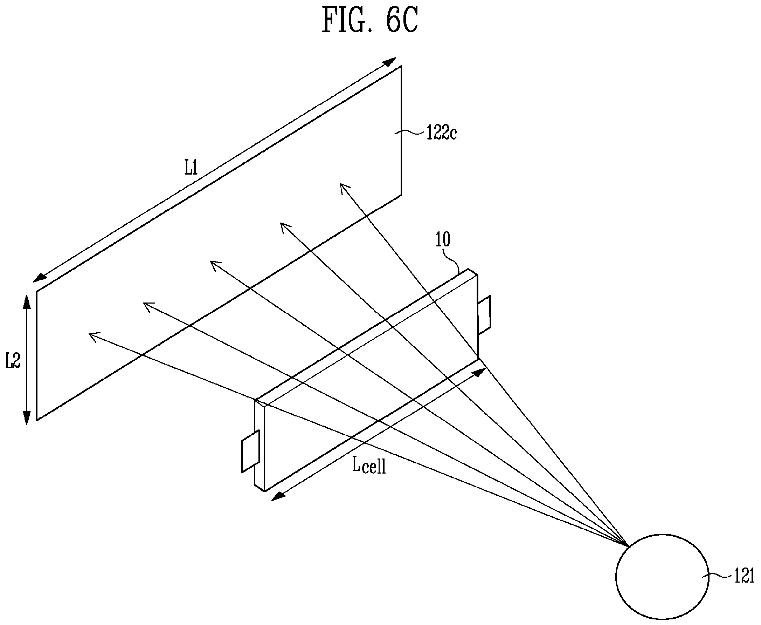

In another embodiment, as shown in FIG. 6C, a first length L1 of a flat panel detector may be longer than the length (L_{cell}) in an electrode tab protrusion direction of a battery cell 10. Here, the direction of the first length L1 may be in parallel with the electrode tab protrusion direction of the battery cell 10.

In addition, a first length L1 of a flat panel detector may be longer than a second length L2 of the flat panel detector. Here, the direction of the second length L2 may be perpendicular to both the direction of the first length L1 and a stacking direction of electrode layers within a battery cell 10.

For example, as shown in FIG. 6C, a first length L1 and a second length L2 of a flat panel detector may be optimized to fit the shape of a battery cell 10, and accordingly, an X-ray imaging area may be increased, so that an image of the entire battery cell 10 may be obtained without moving the battery cell 10. In other words, the number of times of measurement and the measurement duration required to obtain an X-ray image of an entire battery cell 10 may be reduced.

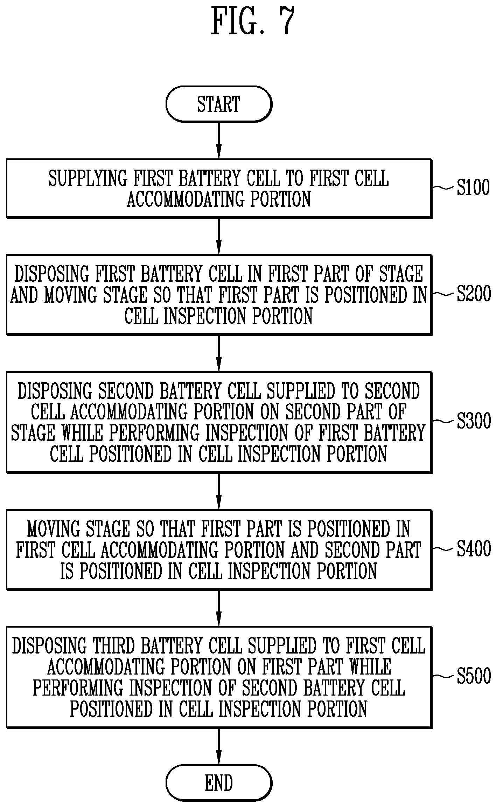

FIG. 7 shows a flowchart for explaining a battery cell inspection method according to an embodiment of the present invention.

Referring to FIGS. 1, 2, and 7, a battery cell supply apparatus 200 may supply a first battery cell to a first cell accommodating portion 110a in a battery cell inspection apparatus 100 (step S100). Accordingly, the first battery cell may be disposed on a first part 131 of a stage 130, and as the stage 130 moves, the first part 131 may be positioned in a cell inspection portion 120 (step S200). The cell inspection portion 120 may perform inspection of the first battery cell positioned in the cell inspection portion 120, and at the same time, the battery cell supply apparatus 200 may supply a second battery cell to a second cell accommodating portion 110b so that the second battery cell may be disposed on a second part 132 of the stage 130 positioned in the second cell accommodating portion 110b (step S300). After the inspection of the first battery cell is completed, the stage 130 may move again so that the first part 131 of the stage 130 may be positioned in the first cell accommodating portion 110a and the second part 132 may be positioned in the cell inspection portion 120 (step S400). The cell inspection portion 120 may perform inspection of the second battery cell positioned in the cell inspection portion 120, and at the same time, the battery cell supply apparatus 200 may supply a third battery cell to the first cell accommodating portion 110a, so that the third battery cell may be disposed on the first part 131 of the stage 130 positioned in the first cell accommodating portion 110a (step S500).

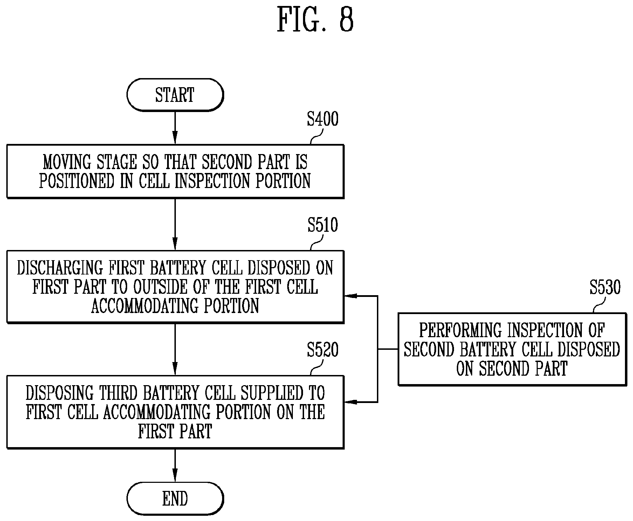

FIG. 8 shows a flowchart for explaining some processes of a battery cell inspection method according to an embodiment of the present invention in more detail.

Referring to FIGS. 7 and 8, FIG. 8 may be a flowchart explaining steps S400 and S500 of FIG. 7 in more detail. First, by step S400, as the stage 130 moves, the first part 131 of the stage 130 may be positioned in the first cell accommodating portion 110a, and the second part 132 may be positioned in the cell inspection portion 120. A first battery cell that has been completely inspected may be positioned on the first part 131 of the stage 130, and a second battery cell that is soon to be inspected may be positioned on the second part 132. In the first cell accommodating portion 110a, the first battery cell that has been completely inspected may be discharged toward a battery cell classification apparatus 300 (step S510). Thereafter, the battery cell supply apparatus 200 may supply the third battery cell to the first cell accommodating portion 110a so that the third battery cell may be disposed on the first part 131 of the stage 130 positioned in the first cell accommodating portion 110a (step S520). While steps S510 and S520 are performed, the cell inspection portion 120 may perform inspection of the second battery cell disposed on the second part 132 of the stage 130 positioned in the cell inspection portion 120 (step S530).

## Claims

1. A battery cell inspection apparatus comprising:
a cell inspection portion inspecting battery cells;
a plurality of cell accommodating portions receiving battery cells from the outside and positioned to be spaced apart from each other with the cell inspection portion therebetween; and
a stage including a first part and a second part in which the battery cells supplied to the cell accommodating portions are disposed and moving the battery cells supplied to the cell accommodating portions while reciprocating the plurality of cell accommodating portions;
wherein, while the second part in which the battery cells are disposed is positioned in the cell inspection portion, a battery cell supplied to a first cell accommodating portion among the plurality of cell accommodating portions is disposed in the second part, and
while the first part in which the battery cells are disposed is positioned in the cell inspection portion, a battery cell supplied to a second cell accommodating portion among the plurality of cell accommodating portions is disposed in the second part.

2. The battery cell inspection apparatus according to claim 1, wherein the cell accommodating portions each include a cell supply area on one side surface, through which battery cells are supplied from the outside.

3. The battery cell inspection apparatus according to claim 2, wherein the cell accommodating portions each include a cell discharge area on the other side surface where the cell supply area is not positioned, through which battery cells are discharged to the outside.

4. The battery cell inspection apparatus according to claim 3, wherein, while the second part, in which battery cells are disposed, is positioned in the cell inspection portion, a battery cell that is positioned on the first part and has moved from the cell inspection portion is discharged to the cell discharge area of the first cell accommodating portion, and while the first part, in which battery cells are disposed, is positioned in the cell inspection section, a battery cell that is positioned in the second part and has moved from the cell inspection portion is discharged to the cell discharge area of the second cell accommodating portion.

5. The battery cell inspection apparatus according to claim 3, wherein the cell supply area and the cell discharge area are positioned on opposite side surfaces of the cell accommodating portions.

6. The battery cell inspection apparatus according to claim 1, wherein the first cell accommodating portion, the second cell accommodating portion, and the cell inspection portion are positioned on a straight line.

7. The battery cell inspection apparatus according to claim 6, wherein the stage reciprocates in a linear direction between the first cell accommodating portion and the second cell accommodating portion.

8. The battery cell inspection apparatus according to claim 1, wherein the cell inspection portion includes an X-ray inspection apparatus.

9. The battery cell inspection apparatus according to claim 8, wherein the X-ray inspection apparatus includes an X-ray output portion and an X-ray detection portion.

10. The battery cell inspection apparatus according to claim 9, wherein the X-ray detection portion includes one or more line scanners in which a plurality of pixels are arranged in a line shape.

11. The battery cell inspection apparatus according to claim 9, wherein the X-ray detection portion includes a flat panel detector including a plurality of pixels, each of which detects X-rays.

12. The battery cell inspection apparatus according to claim 11, wherein in the X-ray detection portion, a first length of the flat panel detector in a first direction, in which an electrode tab protrudes from the battery cell, is longer than the length of the battery cell in the first direction.

13. The battery cell inspection apparatus according to claim 12, wherein a second length of the flat panel detector in a second direction, which is perpendicular to both the first direction and a stacking direction of electrode layers within the battery cells, is shorter than the first length of the flat panel detector.

14. The battery cell inspection apparatus according to claim 8, wherein the cell inspection portion includes a shielding portion preventing X-rays from being emitted to the outside.

15. The battery cell inspection apparatus according to claim 14, wherein the shielding portion is formed to surround the outer circumference of the cell inspection portion.

16. A battery cell inspection method comprising:
supplying a first battery cell to a first cell accommodating portion;
disposing the first battery cell on a first part of a stage and moving the stage so that the first part is positioned in a cell inspection portion;
performing inspection of the first battery cell positioned in the cell inspection portion;
disposing a second battery cell supplied to a second cell accommodating portion on a second part of the stage while performing inspection of the first battery cell;
moving the stage so that the second part is positioned in the cell inspection portion; and
performing inspection of the second battery cell positioned in the cell inspection portion.

17. The battery cell inspection method according to claim 16, further comprising:
disposing a third battery cell supplied to the first cell accommodating portion on the first part while performing inspection of the second battery cell.

18. The battery cell inspection method according to claim 17, wherein the disposing the third battery cell supplied to the first cell accommodating portion includes discharging the first battery cell disposed on the first part to the outside of the first cell accommodating portion.

19. A battery cell inspection system comprising:
a battery cell supply apparatus supplying supplies battery cells;
a battery cell inspection apparatus receiving battery cells from the battery cell supply apparatus, performing inspection, and discharging battery cells that have been completely inspected; and
a battery cell classification apparatus classifying battery cells discharged from the battery cell inspection apparatus according to inspection results,
wherein the battery cell supply apparatus includes: a cell inspection portion inspecting battery cells; a plurality of cell accommodating portions receiving battery cells from the outside and positioned to be spaced apart from each other with the cell inspection portion therebetween; and a stage including a first part and a second part in which the battery cells supplied to the cell accommodating portions are disposed and moving the battery cells supplied to the cell accommodating portions while reciprocating the plurality of cell accommodating portions;
wherein, while the second part in which the battery cells are disposed is positioned in the cell inspection portion, a battery cell supplied to a first cell accommodating portion among the plurality of cell accommodating portions is disposed on the second part, and
while the first part in which the battery cells are disposed is positioned in the cell inspection portion, a battery cell supplied to a second cell accommodating portion among the plurality of cell accommodating portions is disposed on the second part.
